# EUROPÄISCHE PATENTANMELDUNG

(11) **EP 0 766 051 A1**
(43) Veröffentlichungstag der Anmeldung: **02.04.1997**
(21) Anmeldenummer: 95810336.8
(22) Anmeldetag: 19.05.1995
(51) Int. Cl.: F25B 29/00, F28D 20/02, F25B 47/00

(54) **Kälteanlage**

(71) Anmelder: Zwahlen, Urs F., CH-8002 Zürich (CH)
(72) Erfinder:
(74) Vertreter: BOVARD AG - Patentanwälte

(57) **Zusammenfassung**

Ein Speichertank (1) für das Kühlmedium und ein Speichertank (3) für das Abtaumedium sind durch eine Trennwand (2), welche einen Überlauf (7) aufweist, getrennt. Das Medium in beiden Tanks weist dieselbe Zusammensetzung auf. Ein Ladekreislauf (24, 26, 27, 28) für den Kühlbetrieb ist mit einem Eiserzeuger (25) verbunden. Der Eiserzeuger (25) bildet Teil eines Kältemittel- oder Eiserzeugungskreislaufes (30, 31, 32, 33, 34, 36, 37, 38). Ein Wärmeaustauscher (17), mit welchem beispielsweise Lebensmittel gekühlt werden, ist mit einem Kühl- oder Abtaukreislauf (11, 12, 13, 14, 15, 16, 18, 19, 20, 21, 22, 23) mit den Speichertanks (1, 3) verbunden. Der Speichertank (3) für das Abtaumedium ist über einen Ladekreislauf (35, 39, 40, 41, 412, 43) für das Abtaumedium mit einem Wärmeaustauscher (35) verbunden, welcher in den Kältemittel- oder Eiserzeugungskreislauf geschaltet ist. Mit der Kälteanlage wird viel weniger Kältemittel benötigt als mit herkömmlichen Anlagen.

## Beschreibung

Die vorliegende Erfindung bezieht sich auf eine Kälteanlage gemäss dem Oberbegriff des Patentanspruches 1.

Kältemittel der Klassifizierung FCKW, H-FCKW und H-FKW tragen bei ihrer Freisetzung in die Atmosphäre zum Abbau der Ozonschicht bei und sind für die Erderwärmung (Treibhauseffekt) mitverantwortlich. Substitute wie R717 (Ammoniak) und R290 (Propan) haben keine derartige Effekte bei der Freisetzung in die Atmosphäre, verfügen aber über Risikofaktoren in bezug auf Brennbarkeit, Explosivität und Giftigkeit.

Es ist eine Aufgabe der vorliegenden Erfindung, ein schnelles und energiesparendes Abtauen des Wärmeaustauschers zu erzielen. Im weiteren soll für die Kälteanlage nur eine kleinst mögliche Kältemittelfüllmenge gebraucht werden. Es sollen eine hohe Produktetemperaturkonstanz, eine hohe Betriebssicherheit, weniger Unterhalt und weniger technische Komponenten ermöglicht werden können. Dies wird erfindungsgemäss erzielt durch die kennzeichnenden Merkmale des Patentanspruches 1. Ausführungsformen ergeben sich aus den abhängigen Ansprüchen.

Mit dem Ziel, die Kältemittelmenge in einer Kälteanlage auf ein Minimum zu reduzieren, steht mit Flüssigeis, d.h. flüssigem, pumpfähigem Eis (z.B. Flo-Ice) ein idealer Kälteträger zur Verfügung, mit welchem latente Energie durch ein Leitungsnetz mittels Pumpen transportiert werden kann. Flüssigeis ist eine Suspension von Eiskristallen in Wasser mit Zusatz eines gefrierpunktabsenkenden Stoffes. Am Verwendungsort, wo Wärmeenergie entzogen (die Kälteenergie 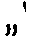 verbraucht") wird, bildet sich bei Wärmeaustauschern, welche mit Luft durchströmt werden, Reif und/oder Eis an den Lamellen infolge der Taupunktunterschreitung der Luft. Diese Reif- oder Eisbildung am Wärmeaustauscher muss in periodischen Zeitabständen abgeschmolzen werden, da mit zunehmendem Reif- oder Eisansatz der Wirkungsgrad des Wärmeaustauschers abnimmt und sich damit der Kühleffekt verschlechtert. Je schneller dieser Eis- oder Reifansatz an den Lamellen des Wärmeaustauschers abgeschmolzen wird, desto geringfügiger ist der Temperaturanstieg des Kühlproduktes und desto weniger wird die Produktequalität beeinträchtigt. Als bekannte Abtaumethoden gelten elektrische Heizungen im Wärmeaustauscher oder Heiss- bzw. Kaltgas von Kältemittel, welches den Wärmeaustauscher innen durchströmt.

Bei der Kälteanlage mit flüssigem, pumpfähigem Eis kann die Abtauung mit warmer Kühlsole, welche in ihrer Zusammensetzung identisch mit dem Flüssigeis ist, erzielt werden. Das zur Abtauung verwendete Medium ist somit das gleiche, wie das Flüssigeis und ist mit diesem hydraulisch auch verbunden, weist jedoch eine Temperatur über Null Grad Celsius auf, damit der Reif bzw. das Eis am Wärmeaustauscher zum Schmelzen gebracht werden kann. Der Abtauvorgang ist sehr wichtig, er muss je nach Anwendungsgebiet bis zu dreimal täglich vorgenommen werden.

Die Verwendung von flüssigem, pumpfähigem Eis kann grundsätzlich überall dort geschehen, wo Kühlung in jeglicher Form notwendig ist, beispielsweise in Supermärkten für Lebensmittelkühlung in Kühl-/Tiefkühlmöbeln und Kühl-/Tiefkühlräumen, bei Klimaanlagen für Komfort- und Prozesskühlung, in Lagerhäusern, in der Gastronomie und in lebensmittelverarbeitenden Betrieben (Schlachtereien, Brauereien, Molkereien, etc.)

Als Kälte- und Abtaumedium können jeglicher Stoff oder Gemische mit Wasser möglich sein, welche ein Herstellen von Flüssiges ermöglichen, u.a. Gemische von Wasser mit Ethanol bzw. Ethylalkohol, Salzlösungen, Tyfoxit, Glykole und dergleichen. Entsprechend der gewünschten Temperatur vom Flüssigeis wird mehr oder weniger temperaturabsenkender Stoff (Frostschutzmittel) dem Wasser beigemischt. Entsprechend dem Leitungsmaterial und den verwendeten Anlagebauteilen ist die Zugabe von einem Korrosionsschutzmittel erforderlich.

Die Verwendung von flüssigem, pumpfähigem Eis (zum Beispiel Flo-Ice) hat grundsätzlich den Vorteil, dass latente Energie in einem Rohrleitungssystem transportiert werden kann und aufgrund der grossen Enthalpie von Eis, sehr geringe Massen- bzw. Volumenströme bewegt werden müssen; in anderen Worten, Eis hat eine hohe Energiedichte und kann deshalb in relativ kleinen Leitungen grosse Leistungen transportieren. Die spezifische Kühlleistung ist um eine Zehnerpotenz besser als die von kaltem Wasser oder Kühlsole. Flüssigeis nimmt Wärme durch die grosse Oberfläche der Eiskristalle und deren hohe Beweglichkeit sehr schnell auf. Versuche haben gezeigt, dass beim Umrüsten von herkömmlichen Kälteanlagen bzw. Kühl-/Tiefkühlmöbeln die Wärmeaustauscher (Verdampfer) für FCKW-Kältemittel im Kühlmöbel belassen werden können und die Kälteleistung im Betrieb mit Flüssiges problemlos erreichen.

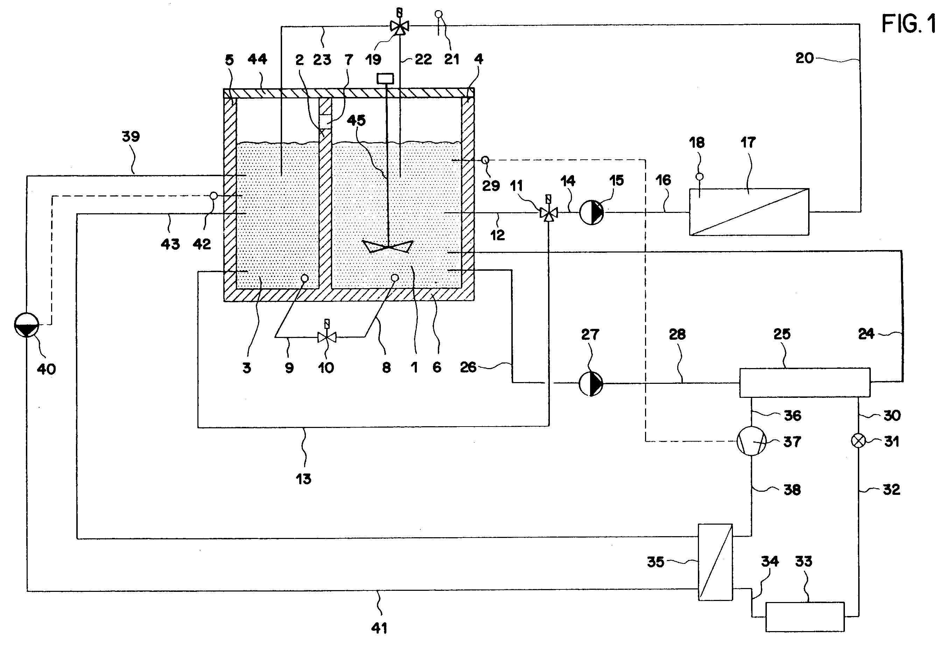

Im folgenden wird anhand der einzigen Figur ein Ausführungsbeispiel der Erfindung sowie dessen Verwendung näher beschrieben. Die Kälteanlage mit integriertem Abtausystem umfasst einen Speichertank 1 zur Aufnahme von Flüssigeis bei ca. - 30 ° C. Dieser Speichertank 1 bildet die 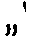 Kaltseite". An den Tank 1 schliesst sich durch eine Trennwand 2 getrennt ein Speichertank 3 für das Abtaumedium mit einer Temperatur von ca. 20 ° C an. Dieser Speichertank 3 bildet die 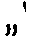 Warmseite". Die Speichertanks 1 und 3 umfassen Seitenwände 4 und 5, einen Boden 6 und kann zusätzlich mit einem Deckel 44 versehen sein. Das hydraulische System kann drucklos sein oder entsprechend der Deckelkonstruktion auch unter Druck stehen. Der Deckel kann mit integrierter Serviceöffnung versehen sein. In der Trennwand 2 ist ein Überlauf 7 vorgesehen. Ein Rührwerk 45 im Tank 1 sorgt für eine homogene Mischung von Flüssigeis auf der 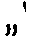 Kaltseite". Das Rührwerk ist in Dauerbetrieb. Beim Fehlen des Rührwerks würde ein Zusammenbacken des Eisgemisches resultieren. Die beiden Speichertanks 1 und 3 sind über zwei Leitungen 8 und 9 mit einem Durchgangsventil 10 verbunden. Ein Dreiwegventil 11 ist über eine Leitung 12 mit dem Speichertank 1 und über eine Leitung 13 mit dem Speichertank 3 verbunden. Der dritte Anschluss des Dreiwegventils 11 führt über eine Leitung 14 zu einer Entladepumpe 15 und von dieser über eine Leitung 16 zu einem Wärmetauscher 17. Der Wärmeaustauscher 17 wird beispielsweise in Kühl-/Tiefkühlmöbeln und Kühl-/Tiefkühlräumen in Supermärkten für die Lebensmittelkühlung, in Klimaanlagen für Komfort- und Prozesskühlung, in Lagerhäusern, in der Gastronomie, in lebensmittelverarbeitenden Betrieben (Schlachtereien, Brauereien, Molkereien, etc.) eingesetzt. Der Wärmeaustauscher 17 ist mit einem Sensor 18 versehen, welcher die weiter unten noch zu erläuternde Abtauung begrenzt bzw. beendet und das Dreiwegventil 11 direkt oder verzögert in die Normalstellung bringt. Ein Dreiwegventil 19 ist über eine Leitung 20 mit dem Wärmeaustauscher 17 verbunden, wobei in dieser Leitung ein Sensor 21 angeordnet ist. Im weiteren ist das Dreiwegventil 19 über eine Leitung 22 mit dem Speichertank 1 und über eine Leitung 23 mit dem Speichertank 3 verbunden. Das Dreiwegventil 11, die Leitungen 12, 13, 14, die Entladepumpe 15, die Leitung 16, der Sensor 18, das Dreiwegventil 19, die Leitungen 20, 22, 23 und der Sensor 21 bilden den Kühl- oder Abtaukreislauf.

Vom Speichertank 1 führt eine Leitung 24 zu einem Eiserzeuger 25 und eine Leitung 26 über eine Ladepumpe 27 und eine Leitung 28 ebenfalls zum Eiserzeuger 25. Ein im Speichertank 1 angeordneter Eiskonzentrationsregler 29 steuert die Kältemaschine 37 (Kompressor). Die Ladepumpe 27 kann (muss nicht wenn auf Dauerbetrieb) auch gesteuert werden. Die Leitungen 24, 26 und 28, die Ladepumpe 27 sowie der Eiskonzentrationsregler 29 bilden den Ladekreislauf für den Kühlbetrieb.

Der Eiserzeuger 25 ist als solcher bekannt. Es kann beispielsweise der Typ 3TR der Integraltechnologie GmbH, Flensburg, DE, (oder das 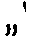 Liquid Ice Generating System" von Ontec) verwendet werden. Bei diesem Eiserzeuger verdampft das Kältemittel im Aussenmantel. An der Innenseite wird mit einem Rührwerk das Eis abgeschabt. Der Eiserzeuger 25 ist über eine Leitung 30 mit einem Drosselorgan 31 verbunden, welches Kältemittel in die Doppelwandung des Eiserzeugers spritzt. Das Drosselorgan 31 ist über eine Leitung 32 mit einem Kondensator 33 verbunden, der als solcher bekannt ist. Der Kondensator 33 ist über eine Leitung 34 mit einem Wärmeaustauscher 35 verbunden. Der Eiserzeuger 25 ist über eine Leitung 36 mit einer Kältemaschine 37 verbunden, welche ihrerseits über eine Leitung 38 mit dem Wärmetauscher 35 verbunden ist. Die Kältemaschine 37 kann beispielsweise als Kolbenkompressor ausgebildet sein. Der Eiskonzentrationsregler 29 am Speichertank 1 steuert ebenfalls die Kältemaschine 37. Der Eiserzeuger 25, das Drosselorgan 31, der Kondensator 33, die Kältemaschine 37 sowie die Leitungen 30, 32, 34, 36 und 38 bilden den Kältemittel- oder Eiserzeugungskreislauf. Als Kältemittel kann beispielsweise Ammoniak oder ein H-FKW verwendet werden. Bei der erfindungsgemässen Kälteanlage muss jedoch nur ca. 1/10 der Menge an herkömmlichen Kältemitteln verwendet werden wie bei bekannten Kälteanlagen.

Der Speichertank 3 für das Abtaumedium ist über eine Leitung 39 mit einer Förderpumpe 40 verbunden. Diese Förderpumpe 40 ist ihrerseits über eine Leitung 41 mit dem Wärmeaustauscher 35 verbunden. Ein im Speichertank 3 für das Abtaumedium angeordneter Temperatursensor 42 steuert die Förderpumpe 40. Der Speichertank 3 ist im weiteren über eine Leitung 43 mit dem Wärmeaustauscher 35 verbunden. Der Wärmeaustauscher 35, die Förderpumpe 40, die Leitungen 39, 41 und 43 sowie der Temperatursensor 42 bilden den Ladekreislauf für das Abtaumedium.

Im folgenden wird die Funktionsweise der Kälteanlage mit dem Abtausystem beschrieben.

Ladekreislauf für den Kühlbetrieb, resp. die Eisproduktion: Aus dem Speichertank 1 wird das Kühlmedium angesaugt und mittels der Ladepumpe 27 durch den eigentlichen Eiserzeuger 25 gedrückt. Im Eiserzeuger wird das Kühlmedium mit Eis angereichert (Eisproduktion) und zurück in den Speichertank 1 gepumpt. Ein Eiskonzentrationsregler 29 schaltet je nach Eisgehalt im Speichertank 1 den Eiserzeuger zu bzw. ab, damit eine relativ konstante Eiskonzentration für den Entladekreislauf zur Verfügung steht.

Kühlbetrieb: Aus dem Speichertank 1 wird über das Dreiwegventil 11 mittels der Entladepumpe 15 Flüssiges angesaugt und via Leitungen 12, 14 und 16 zu der Kühlstelle bzw. zum Wärmeaustauscher 17 gepumpt. An der Kühlstelle bzw. am Wärmeaustauscher 17 wird die Wärmeenergie entzogen und der Kühleffekt erzielt. Indem, dass mit Wasserdampf angereicherte Luft über den Wärmeaustauscher 17 mit seinen Lamellen streicht, wird die Taupunkttemperatur der Luft unterschritten, worauf sich an den Wärmeaustauscherlamellen Reif bzw. Eis bildet. Über das Leitungssystem gelangt das Kühlmedium, welches nun je nach Belastung an der Kühlstelle noch mit Eis angereichert sein kann, über die Leitung 20 und das Dreiwegventil 19 zurück in den kalten Teil des Speichertanks 1, womit sich der Kühlkreislauf schliesst. Durch die Reif- bzw. Eisbildung an den Lamellen des Wärmeaustauschers verschlechtert sich der Wirkungsgrad bzw. der Kühleffekt an der Kühlstelle derart, dass in gewissen Zeitabständen der Wärmeaustauscher 17 mit seinen Lamellen vom Eis bzw. Reif befreit, also abgetaut werden muss.

Abtaubetrieb:Das Abtauen des Wärmeaustauschers 17 erfolgt durch dasselbe Kühlmedium, aus welchem das Flüssigeis besteht, aber mit einer Temperatur über 0° C. Die für die Abtauung erforderliche Energie wird durch die Abwärme der Eisproduktion von der Kältemaschine 37 geliefert, indem über einen Kreislauf mit integriertem Wärmeaustauscher 35 die Enthitzungs- und Kondensationswärme oder Teile davon verwendet werden. Diese Abtauenergie wird im warmen Teil des Speichertanks 3 gelagert. Beim Erreichen der gewünschten Temperatur im warmen Teil des Speichertanks wird der Ladekreislauf für die Gewinnung der Abtauenergie unterbrochen.

Beim Abtaubetrieb wird über das Dreiwegventil 11 von der Entladepumpe 15 über die Leitung 13 das warme Medium angesaugt und via Leitungen 14 und 16 dem Wärmeaustauscher 17 zugeführt. Bei diesem Vorgang schiebt die Warmsole bzw. das warme Medium das noch in den Leitungen und im Wärmeaustauscher verbleibende Flüssigeis vor sich her. Dieser Ausstoss vom Flüssigeis wird so lange in den kalten Teil des Speichertanks geleitet, bis der Sensor 21 das warme Kühlmedium registriert und via Dreiwegventil 19 das nun erwärmte Abtaumedium in den warmen Teil 3 des Speichertanks umleitet. Würde das erwärmte Abtaumedium in den kalten Teil 1 des Speichertanks geführt, würde das gespeicherte Flüssiges teilweise geschmolzen, was aus energetischer Sicht schlecht ist. Durch das Umschalten des Dreiwegventils 19 soll sichergestellt werden, dass sich praktisch ausschliesslich nur mit Eis angereichertes Kühlmedium im kalten Teil des Speichertanks befindet. Durch das warme Abtaumedium wird der Wärmeaustauscher 17 erwärmt und das Eis bzw. der Reif abgeschmolzen.

Durch den Sensor 18 wird die Abtauung begrenzt bzw. beendet und das Dreiwegventil 11 direkt oder verzögert in die Normalstellung, d.h. auf Betrieb mit Flüssigeis zurückgestellt, womit die Entladepumpe 15 wieder Flüssigeis zum Wärmeaustauscher 17 pumpt. Bei diesem Vorgang schiebt das Flüssigeis bzw. das kalte Medium das noch in den Leitungen und im Wärmeaustauscher verbleibende, warme Abtaumedium vor sich her. Dieser Ausstoss vom warmen Abtaumedium wird solange in den warmen Teil 3 des Speichertanks geleitet, bis der Sensor 21 das kalte Medium registriert und via Dreiwegventil 19 das Flüssigeis wieder in den kalten Teil des Speichertranks leitet. Damit wird sichergestellt, dass grundsätzlich warmes Abtaumedium in den warmen Teil 3 und Flüssigeis nur in den kalten Teil 1 des Speichertanks geleitet wird.

Es können ein oder mehrere Wärmeaustauscher gleichzeitig abgetaut werden, wobei ein oder mehrere Entladepumpen mit den dazugehörenden Leitungssystemen und mehrere Dreiwegventile möglich sind.

Nach Beendigung der Abtauung kann durch zeitliche Verschiebungen bzw. durch ungleich lange Öffnungs- und Schliesszeiten der Dreiwegventile 11 und 19 ein unausgeglichener Flüssigkeitsspiegel im warmen und im kalten Teil des Speichertanks auftreten. Zur Egalisierung des Flüssigkeitsstandes in beiden Speicherteilen 1, 3 wird mit dem Öffnen eines Durchgangsventils 10 für kurze Zeit im Sinne von kommunizierenden Gefässen der Ausgleich des Pegels erreicht. Das Durchgangsventil 10 muss während dem Abtauen auf jeden Fall geschlossen sein, kann aber beim Kühlbetrieb und nach der Beendigung der Abtauung dauernd geöffnet bleiben.

Im Falle einer Störung an den Dreiwegventilen 11 und 19 könnte während dem Kühlbetrieb oder während dem Abtaubetrieb der warme oder kalte Teil 1, 3 des Speichertanks leergepumpt bzw. zum Überlaufen gebracht werden. Mit dem Überlauf 7, mit einer oder mehreren Öffnungen vom kalten zum warmen Teil, kann ein Überlaufen eliminiert werden. Anstelle eines Speichertanks mit einer gemeinsamen Trennwand vom kalten Teil 1 zum warmen Teil 3 können zwei separate Speicher eingesetzt werden; der Überlaufschutz 7 kann mit einem oder mehreren Verbindungsrohren hergestellt sein, die Ausgleichsleitung mit dem Durchgangsventil 10 bleibt in jedem Fall.

## Patentansprüche

1. Kälteanlage mit einem Kältemittel- oder Eiserzeugungskreislauf (30, 31, 32, 33, 34, 36, 37, 38) und mindestens einem ersten Wärmeaustauscher (17), gekennzeichnet durch mindestens ein erstes Speicherorgan (1) für ein Kühlmedium und mindestens ein zweites Speicherorgan (3) für ein Abtaumedium, wobei das Kühl- und Abtaumedium dieselbe Zusammensetzung aufweisen, einen Ladekreislauf (24, 26, 27, 28) für Kühlbetrieb sowie einen Kühl- oder Abtaukreislauf (11, 12, 13, 14, 15, 16, 18, 19, 20, 21, 22, 23).

2. Kälteanlage nach Patentanspruch 1, dadurch gekennzeichnet, dass das Kühlmedium aus Flüssigeis besteht.

3. Kälteanlage nach Patentanspruch 1 oder 2, gekennzeichnet durch einen Ladekreislauf (35, 39, 40, 41, 42, 43) für das Abtaumedium.

4. Kälteanlage nach einem der vorangehenden Patentansprüche, dadurch gekennzeichnet, dass die Speicherorgane für das Kühl- und Abtaumedium als Speichertanks (1, 3) ausgebildet sind.

5. Kälteanlage nach Patentanspruch 4, dadurch gekennzeichnet, dass die Speichertanks (1, 3) durch eine Trennwand (2) getrennt sind, wobei in der Trennwand ein Überlauf (7) angeordnet ist.

6. Kälteanlage nach Patentanspruch 4, dadurch gekennzeichnet, dass die Speichertanks (1, 3) getrennt angeordnet und mit mindestens einem Rohr für den Überlauf verbunden sind.

7. Kälteanlage nach einem der vorangehenden Patentansprüche, dadurch gekennzeichnet, dass der Kältemittel- oder Eiserzeugungskreislauf (30, 31, 32, 33, 34, 36, 37, 38) einen Eiserzeuger (25) umfasst.

8. Kälteanlage nach Patentanspruch 7, dadurch gekennzeichnet, dass der Eiserzeuger (25) einerseits mit einer ersten Leitung (24) und andererseits mit einer zweiten Leitung (26, 28) mit einer Ladepumpe (27) mit dem Speichertank (3) für das Kühlmedium verbunden ist.

9. Kälteanlage nach Patentanspruch 8, dadurch gekennzeichnet, dass der Speichertank (3) für das Kühlmedium einen Eiskonzentrationsregler (29) zur Regelung der Ladepumpe (27) und einer Kältemaschine (37) des Kältemittelkreislaufes (30, 31, 32, 33, 34, 36, 37, 38) umfasst.

10. Kälteanlage nach einem der vorangehenden Patentansprüche, dadurch gekennzeichnet, dass das eine Ende des ersten Wärmeaustauschers (17) über eine Entladepumpe (15) und ein erstes Ventil (11) mit den Speichertanks (1, 3) für das Kühl- resp. Abtaumedium und das andere Ende über ein zweites Ventil (19) mit den Speichertanks (1, 3) verbunden ist.

11. Kälteanlage nach einem der vorangehen Patentansprüche, dadurch gekennzeichnet, dass der Speichertank (3) für das Abtaumedium einerseits über eine durch einen Temperatursensor (42) gesteuerte Förderpumpe (40) mit einem in den Kältemittel- oder Eiserzeugungskreislauf (30, 31, 32, 33, 34, 36, 37, 38) geschalteten zweiten Wärmeaustauscher (35) und andererseits direkt mit dem zweiten Wärmeaustauscher (35) verbunden ist.

12. Kälteanlage nach einem der vorangehenden Patentansprüche, dadurch gekennzeichnet, dass das erste und zweite Speicherorgan (1, 3) über eine dritte und eine vierte Leitung (8, 9) und ein Durchgangsventil (10) miteinander verbunden sind.
